# EUROPÄISCHE PATENTSCHRIFT

(11) **EP 0 990 477 B1**
(45) Veröffentlichungstag und Bekanntmachung des Hinweises auf die Patenterteilung: **05.01.2005**
(21) Anmeldenummer: 99810797.3
(22) Anmeldetag: 06.09.1999
(51) Int. Cl.: B23B 29/034

(54) **Ausdrehkopf**
Boring head
Boring head

(30) Priorität: 02.10.1998 CH 201198
(43) Veröffentlichungstag der Anmeldung: 05.04.2000
(73) Patentinhaber: Heinz Kaiser AG, 8153 Rümlang (CH)
(72) Erfinder: Kaiser, Heinz, 8304 Wallisellen (CH); Pape, Dieter, 8153 Rümlang (CH)
(74) Vertreter: Groner, Manfred

(56) Entgegenhaltungen:
- EP-A- 0 564 425

## Beschreibung

Die Erfindung betrifft einen Ausdrehkopf nach dem Oberbegriff des Anspruchs 1.

Ein Ausdrehkopf dieser Art ist durch die EP 0 564 425 A bekannt geworden. Bei diesem besitzen der Werkzeugkörper und der Schneiderträger Keilflächen, die parallel zueinander verlaufen. Beim Spannen des Schneidenträgers liegen die beiden Keilflächen flächig aneinander an. Eine radiale Spannkraft ist nur sehr beschränkt ausübbar, da beim Anziehen der Spannschrauben die Reibungskraft zwischen den Keilflächen schnell ansteigt und der Schneidenträger sich gegenüber dem Werkzeugträger radial nicht mehr verschiebt.

Ein weiterer Ausdrehkopf ist im Stand der Technik aus der US-A-4,231,691 des Anmelders bekannt geworden. Bei diesem sind zwei Schneidenträger vorgesehen, die unabhängig voneinander und stufenlos axial als auch radial verstellbar sind. Zur Lagerung der beiden Schneidenträger weist der Werkzeugkörper stirnseitig einen radial verlaufenden durchgehenden Kanal auf, in den die beiden Schneidenträger radial verschiebbar und zur Drehmomentübertragung abgestützt sind. Beide Schneidenträger werden mit einer Spannschraube axial gegen den Werkzeugkörper gespannt. Die axiale Feineinstellung der beiden Schneidenträger erfolgt jeweils mit einer Einstellschraube, die in eine axiale Gewindebohrung des Schneidenträgers eingesetzt ist und die an ihrem inneren Ende an einer Spannfläche des Werkzeugkörpers abgestützt ist. Die Anlage der Einstellschrauben am Werkzeugkörper ergibt jeweils eine punktförmige Auflage.

Die US-A-5,054,970 zeigt einen Ausdrehkopf, der ebenfalls zwei Schneidenträger aufweist. Zum Spannen der beiden Schneidenträger sind hier zwei Klemmschrauben vorgesehen, die geneigt zur Drehachse des Werkzeugs verlaufen und jeweils einen Schneidenträger gegen den Werkzeugkörper spannen. Zur radialen und axialen Verstellung der Schneidenträger sind zwei koaxial angeordnete Verstellschrauben vorgesehen, die im Werkzeugträger angeordnet sind. Die eine dieser Schrauben weist einen exzentrischen Kopf auf, der unterseitig an einem Schneidenträger anliegt. Beim Drehen dieser Verstellschraube wird der entsprechende Schneidenträger axial bewegt. Auch hier ergibt sich eine punktförmige Auflage des Schneidenträgers auf der genannten exzentrischen Verstellschraube. Beim radialen Verstellen der Schneidenträger werden diese jeweils auf dem exzentrischen Kopf verschoben, wobei sich durch die schräge Position die Länge des Werkzeugs verstellt. Diese Länge muss dann nach jeder radialen Verstellung korrigiert werden. Auch hier sitzen die beiden Schneidenträger in einem Führungskanal des Werkzeugkörpers.

Die US-A-3,782,849 zeigt einen Ausdrehkopf mit zwei Schneidenträger, die miteinander verzahnt sind. Die gegenseitige Verzahnung der beiden Schneidenträger erhöht die Stabilität, verhindert aber die stufenlose axiale Verstellbarkeit der Schneiden.

Der Erfindung liegt die Aufgabe zugrunde, einen Ausdrehkopf der genannten Art zu schaffen, bei die einzelnen axial und radial verstellbaren Schneidenträger zur Drehmomentübertragung stabiler als bisher am Werkzeugkörper abgestützt sind und der trotzdem eine einfache Handhabung ermöglicht und kostengünstig herstellbar ist.

Die Erfindung ist bei einem gattungsgemässen Ausdrehkopf gemäss Anspruch 1 gelöst.

Beim erfindungsgemässen Ausdrehkopf ist für beide Schneidenträger eine definierte und flächige Auflage am Werkzeugträger gewährleistet. Mit den genannten Keilflächen wird auf die beiden Schneidenträger jeweils eine radiale Kraft ausgeübt, welche die beiden Mitnahmeflächen miteinander verspannt. Wesentlich ist nun, dass diese Verspannung unabhängig ist von der axialen Position des jeweiligen Schneidenträgers. Die Anlage dieser beiden Mitnahmeflächen ist somit in jeder axialen Position gewährleistet. Bei einer Schneidhöhenverstellung wird diese flächige Anlage nicht verändert. Die beiden Mitnahmeflächen stehen zwangsläufig unter Vorspannung durch die radiale Kraft, welche durch die genannten beiden Keilflächen ausgeübt wird.

Die beiden Keilflächen sind zur Drehachse des Werkzeugkörpers unterschiedlich schräggestellt. Damit kann eine im Wesentlichen lineare Auflage des Schneidenträgers am Werkzeugkörper erreicht werden. Durch eine definierte Winkeldifferenz zwischen den beiden Keilflächen kann die radiale Spannkraft optimal eingestellt werden.

Nach einer Weiterbildung der Erfindung ist die Mitnahmefläche und die Keilfläche des Werkzeugkörpers an einem axial vorspringenden Ansatz des Werkzeugkörpers angeordnet und dieser Ansatz greift in eine Vertiefung des Schneidenträgers ein. Im Gegensatz zum Stand der Technik sind bei Ausdrehkopf gemäss der Erfindung die beiden Schneidenträger nicht in einem Kanal des Werkzeugkörpers gelagert, sondern sitzen auf einem vorspringenden und sattelförmigen Ansatz der Werkzeugkörpers. An diesem Ansatz sind die schräggestellte Keilfläche und die Mitnahmefläche im Abstand zueinander angeordnet. Der Ansatz greift in eine entsprechende kanalförmige Vertiefung des Schneidenträgers ein. Bei einem Zweischneider sind entsprechend zwei solche Ansätze vorgesehen und jeder Schneidenträger besitzt entsprechend unterseitig einen entsprechenden Kanal. Durch diese erfindungsgemässe Weiterbildung kann der Werkzeugkörper wesentlich kompakter als bisher ausgebildet werden. Der bisher störende seitliche Lappen des Kanals kann vermieden werden, was einen besseren Spanabfluss ergibt. Ein möglichst störungsfreier Spanabfluss ist eine wesentliche Eigenschaft eines solchen Ausdrehkopfes. Durch die kompakte Bauweise wird die Reinigung erleichtert.

Nach einer Weiterbildung der Erfindung ist vorgesehen, dass die Verstellmittel eine exzentrische Walze aufweisen, welche im Werkzeugkörper drehbar gelagert ist und mit welcher der Schneidenträger entlang einer linienförmigen Berührungsfläche zusammenarbeitet. Beim Drehen dieser exzentrischen Walze wird der Schneidenträger axial bewegt. Wesentlich ist nun, dass die Berührungsfläche zwischen der Walze und dem Schneidenträger linienförmig und nicht punktförmig ist. Die exzentrische Walze erstreckt sich vorzugsweise im wesentlichen über die ganze Länge der Spannfläche. Beim Verstellen der axialen Länge wird der Schneidenträger um die ebenfalls lineare Anlagefläche der beiden Keilflächen verschwenkt. Diese Schwenkbewegung ist unabhängig von der radialen Position des Schneidenträgers. Wird die radiale Position verstellt, so bleibt die Länge des Werkzeuges genau erhalten. Ein Nachkorrigieren ist somit nicht erforderlich.

Zur radialen Verstellung des Schneidenträgers ist gemäss einer Weiterbildung vorgesehen, dass der Schneidenträger eine quer zur Drehachse verlaufende Stellschraube aufweist, die zur Einstellung des Ausdrehdurchmessers an die Klemmschraube anlegbar ist. Diese Klemmschraube erstreckt sich vorzugsweise axial in eine Gewindebohrung des Werkzeugkörpers und spannt den Schneidenträger gegen den Werkzeugkörper.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
Figur 1 eine Ansicht eines erfindungsgemässen Ausdrehkopfes,
Figur 2 eine weitere verkleinerte Ansicht des Ausdrehkopfes,
Figur 3 eine weitere Ansicht des Ausdrehkopfes, und
Figuren 4 und 5 Teilansichten des Ausdrehkopfes bei gleichen Schneidenhöhen, aber unterschiedlichen Fertigungstoleranzen, und
Figur 6 eine weitere Teilansicht mit axial korrigiertem Schneidenträger.

Der Ausdrehkopf 1 weist einen im wesentlichen zylindrischen Werkzeugkörper 7 auf, an dem zwei gleiche Schneidenträger 2 gelagert sind. An jedem Schneidenträger 2 ist mit einer Klemmschraube 5 eine Schneidplatte 4 befestigt, die eine Schneide 3 besitzt. Der gezeigte Ausdrehkopf 1 ist ein sogenannter Zweischneider, es ist jedoch auch eine Ausführung möglich, bei welcher lediglich ein Schneidenträger mit einer Schneidplatte 4 am Werkzeugkörper 7 gelagert ist.

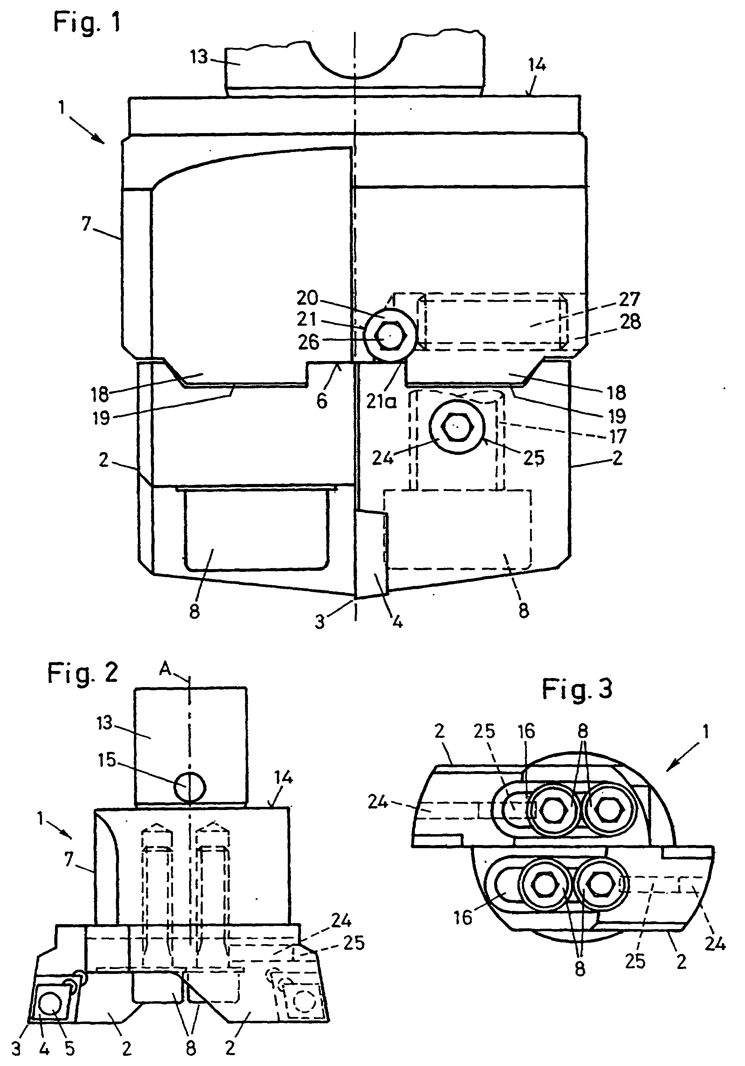

Der Ausdrehkopf 1 weist die in Figur 2 gezeigte Drehachse A auf und besitzt einen Befestigungszapfen 13, mit welchem der Ausdrehkopf 1 in einem hier nicht gezeigten Schaft oder einem ähnlichen Befestigungsteil lösbar befestigt werden kann. Hierzu ist in bekannter Weise eine nicht gezeigte Spannschraube vorgesehen, die in ein konisches Loch 15 des Befestigungszapfens 13 eingreift, um eine quer zur Achse A verlaufende Spannfläche 14 an eine entsprechende Fläche des hier nicht gezeigten Befestigungsteils anzulegen. Zur Drehmomentübertragung kann der Befestigungszapfen 13 zudem einen hier nicht gezeigten Mitnehmer aufweisen.

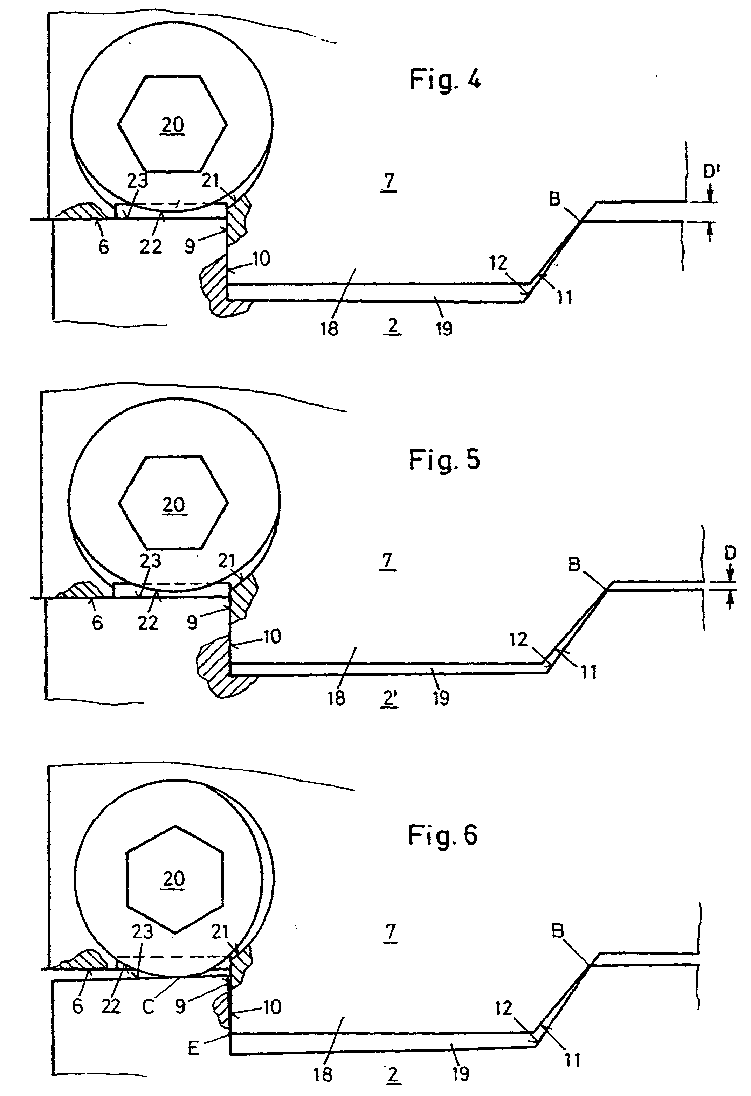

Zur Befestigung der beiden Schneidenträger 2 am Werkzeugkörper 7 sind mindestens zwei Spannschrauben 8 vorgesehen, welche jeweils ein Langloch 16 eines Schneidenträgers 2 durchgreifen und die jeweils in eine axiale Gewindebohrung 17 des Werkzeugkörpers 7 eingesetzt sind. Sämtliche Spannschrauben 8 verlaufen parallel zur Drehachse A. Durch Anziehen der Spannschrauben 8 werden die Schneidenträger 2 jeweils unabhängig voneinander gegen eine Spannfläche 6 des Werkzeugkörpers 7 gespannt. Die beiden Schneidenträger 2 liegen auf der gleichen Spannfläche 6 auf, die gemäss Figur 1 zwischen zwei sattelförmigen Ansätzen 18 angeordnet ist. Diese Ansätze 18 erstrecken sich im wesentlichen über die gesamte Breite des Werkzeugkörpers 7 und greifen jeweils in eine kanalförmige Ausnehmung 19 des Schneidenträgers 2 ein. Die Ansätze 18 besitzen jeweils im Abstand zueinander aussen eine zur Achse A geneigte Keilfläche 11 und innenseitig eine parallel zur Achse A verlaufende Mitnahmefläche 9. Korrespondierend dazu besitzen die Ausnehmungen 19 jeweils aussen eine Keilfläche 12 sowie eine Mitnahmefläche 10. Die beiden Mitnahmeflächen 9 und 10 liegen flächig aneinander an, während die Berührungsfläche zwischen den beiden Keilflächen 11 und 12 linear ist. In den Figuren 4 bis 6 ist diese lineare Berührungsfläche mit B bezeichnet.

Zur Schneidhöhenverstellung sind im Werkzeugkörper 7 zwei Walzen 20 jeweils im Abstand zueinander in einer glatten Querbohrung 21 begrenzt drehbar gelagert. Diese Walzen 20 besitzen eine unrunde Aussenseite 22, wie insbesondere die Figuren 4 bis 6 zeigen. Zum Drehen der Walzen 20 weisen diese jeweils eine sechskantige Vertiefung 26 auf, in die ein geeigneter Werkzeugschlüssel einsetzbar ist. Mit jeweils einer Madenschraube 27, die in eine Gewindebohrung 28 eingeschraubt ist, können die Walzen 20 einzel drehsicher fixiert werden.

Die Bohrungen 21 weisen jeweils eine Längsöffnung 21a auf, die sich in der Spannfläche 6 befindet. In der in Figur 4 gezeigten Drehstellung der Walze 20 befindet sich die Fläche 22 vollständig unterhalb der Spannfläche 6. Wird die Walze 20 um wenige (beispielsweise 10) Grad gedreht, so legt sich ihre Mantelfläche 22 an eine ebene innere Fläche 23 des benachbarten Schneidenträgers 2 an und übt beim Weiterdrehen der Walze 20 in die gleiche Richtung eine axiale Kraft aus. Ist der Schneidträger 2 durch die beiden Spannschrauben 8 nicht festgelegt, so wird der Schneidenträger 2 und damit die Schneide 3 axial bewegt. Gleichzeitig hebt die Fläche 23 des Schneidenhalters 2 von der Spannfläche 6 des Werkzeugkörpers 7 ab. Wesentlich ist nun, dass die Berührungsfläche zwischen der Walze 20 und dem Schneidenträger 2 nicht punktförmig ist, sondern sich im wesentlichen über die gesamte Breite des Werkzeugkörpers 7 erstreckt. In der Figur 6 ist diese Berührungsfläche mit C bezeichnet.

Zum radialen Verstellen der beiden Schneidenträger 2 weisen diese jeweils in einer Gewindebohrung 25 eine Stellschraube 24 auf, die an ihrem inneren Ende an einer der Spannschrauben 8 anliegt. Die Schrauben 24 erstrecken sich quer zur Drehachse A und parallel zur Verstellrichtung des jeweiligen Schneidenträgers 2. Wird eine Stellschraube 24 in die Gewindebohrung 25 hineingedreht, so bewegt sich der zugehörige Schneidenträger 2 nach aussen. Der Ausdrehdurchmesser wird damit vergrössert. Wesentlich ist nun, dass die Verstellung des Ausdrehdurchmessers mit den Stellschrauben 24 unabhängig ist von der Schneidenhöhenverstellung anhand der Stellschrauben 20. Eine Verschiebung der Schneidenträger 2 in radialer Richtung hat somit keinen Einfluss auf Schneidenhöhe und umgekehrt hat eine Veränderung der Schneidenhöhe keinen Einfluss auf den Ausdrehradius. Die eingestellten Positionen der beiden Schneidenträger 2 werden durch Festziehen der Spannschrauben 8 erreicht. Die Walzen 20 sind selbsthemmend ausgebildet. Beim Festziehen der Spannschrauben 8 werden somit die Drehstellungen der Walzen 20 nicht verändert. Die Walzen 20 sind vorzugsweise so ausgebildet, dass sie lediglich über einen Winkelbereich von 90° schwenkbar sind. Die Drehrichtung zum Anheben der Schneidenhöhe ist damit immer gleich. Die Endpositionen der Schwenkbewegung können durch hier nicht gezeigte Anschläge erreicht werden. Denkbar ist aber auch eine Ausführung, bei welcher die Walzen 20 unbegrenzt drehbar sind.

Die Figur 4 zeigt einen Schneidenträger 2 in einer Position, in welcher dieser flächig an der Spannfläche 6 anliegt. Die Walze 20 ist hier somit nicht in Eingriff mit dem Schneidenträger 2. Die beiden Spannschrauben 8 des Schneidenträgers 2 sind festgezogen. Durch die Wirkung der Keilfläche 11 wird die Mitnahmefläche 10 gegen die Mitnahmefläche 9 des Werkzeugkörpers 7 gespannt. Diese Abstütztung des Schneidenträgers 2 am Werkzeugkörper 7 ist weitgehend unabhängig von Toleranzabweichungen. So zeigt die Figur 5 einen Schneidenträger 2', bei welchem der Abstand zwischen der Mitnahmefläche 10 und der Keilfläche 12 grösser ist als beim Schneidenträger 2 nach der Figur 4. Die Berührungsfläche B zwischen den beiden Keilflächen 11 und 12 hat sich gegenüber der Figur 4 nach oben verschoben, der Abstand D zwischen dem Schneidenträger 2' und dem Werkzeugkörper 7 ist somit kleiner als der entsprechende Abstand D' nach Figur 4. Die Keilfläche 11 übt aber auch bei dieser Toleranzabweichung auf den Schneidenträger 2' eine Kraft aus, welche die Mitnahmefläche 10 gegen die Mitnahmefläche 9 spannt. Diese Spannkraft ist auch bei der Stellung gemäss der Figur 6 gewährleistet, bei welcher der Schneidenträger 2 durch die Walze 20 von der Spannfläche 6 abgehoben ist. Die beiden Mitnahmeflächen 9 und 10 sind geringfügig gegeneinander geneigt und weisen eine etwa linearförmige Berührungsfläche E auf. Der Schneidenträger 2 ist somit an den Flächen B, C und E am Werkzeugkörper 7 abgestützt. Die Flächen B, C und E sind wie erwähnt nicht punktförmig, sondern erstrecken sich im wesentlichen über die gesamte Breite des Werkzeugkörpers 7. Dadurch wird eine besonders stabile Abstützung des Schneidenträgers 2 am Werkzeugkörper 7 erreicht. Eine solche Abstützung ist in jeder Position des Schneidenträgers 2 und auch bei Toleranzabweichungen am Schneidenträger 2 und am Werkzeugkörper 7 gewährleistet.

Die Schneidenhöhenverstellung über die Walzen 20 ist somit stufenlos. Bei der Schneidenhöhenverstellung werden die Schneidenträger 2 jeweils parallel angehoben. Damit können Fabrikationstoleranzen der Schneidenträger und der Wendeplatten, welche sich auf die Schneidenhöhe auswirken und ungünstige Arbeitsbedingungen zur Folge haben, ausgeglichen werden. Es ist aber auch möglich, die beiden Schneiden in der Höhe zueinander zu besetzen, um eine Schnittaufteilung zu erreichen.

## Patentansprüche

1. Ausdrehkopf mit einem Werkzeugkörper und wenigstens einem auf diesem lösbar befestigten Schneidenträger (2), der zur radialen Verstellung der Schneide (3) auf einer Spannfläche (6) des Werkzeugkörpers (7) gleitverschieblich gelagert ist, mit Spannmitteln (8) zum Spannen des Schneidenträgers (2) gegen die genannte Spannfläche (6) und mit einer am Werkzeugkörper (7) angeordneten Mitnahmefläche (9), die mit einer korrespondierenden Mitnahmefläche (10) des Schneidenträgers (2) zur Drehmomentübertragung zusammenarbeitet, dass der Werkzeugkörper (7) im Abstand zu seiner Mitnahmefläche (9) eine schräggestellte äussere Keilfläche (11) aufweist, gegen die eine ebenfalls schräggestellte Keilfläche (12) des Schneidenträgers (2) gespannt ist und dass die Keilfläche (11) des Werkzeugträgers (7) auf den Schneidenträger (2) eine radiale Spannkraft ausübt, welche die Mitnahmefläche (10) des Schneidenträgers (2) radial gegen die Mitnahmefläche (9) des Werkzeugkörpers (7) spannt, **dadurch gekennzeichnet, dass** die beiden Keilflächen (11, 12) zur Drehachse (A) des Werkzeugkörpers (7) unterschiedlich schräg gestellt sind, derart, dass der Schneidenträger (2) im Wesentlichen auf einer Linie (B) an der Keilfläche (11) des Werkzeugkörpers (7) aufliegt, wobei die genannte Linie (B) im Abstand zu den Mitnahmeflächen (9, 10) angeordnet ist.

2. Ausdrehkopf nach Anspruch 1, **dadurch gekennzeichnet, dass** die Mitnahmefläche (10) und die Keilfläche (11) des Werkzeugkörpers (7) an einem vorspringenden Ansatz (18) des Werkzeugkörpers (7) angeordnet sind und dieser Ansatz (18) in eine Vertiefung (19) des Schneidenträgers (2) eingreift.

3. Ausdrehkopf nach Anspruch 1 oder 2, **dadurch gekennzeichnet, dass** der Werkzeugkörper (7) im Abstand zu seiner Keilfläche (11) eine senkrecht zur Drehachse (A) verlaufende Spannfläche (6) aufweist, die gegenüber der Schneide (3) angeordnet ist und auf welcher eine Spannfläche (23) des Schneidenträgers (2) flächig anlegbar ist.

4. Ausdrehkopf nach einem der Ansprüche 1 bis 3, **dadurch gekennzeichnet, dass** die Mitnahmefläche (10) des Schneidenträgers (2) und die Mitnahmefläche (9) des Werkzeugkörpers (7) im Wesentlichen rechtwinklig zur Schnittkraft (F) verlaufen.

5. Ausdrehkopf nach einem der Ansprüche 1 bis 4, **dadurch gekennzeichnet, dass** der Werkzeugkörper (7) im Abstand zu den genannten beiden Keilflächen (11, 12) Verstellmittel (20) aufweist, mit denen die Schneide (3) zur Höhenverstellung axial bewegbar ist.

6. Ausdrehkopf nach Anspruch 5, **dadurch gekennzeichnet, dass** die Verstellmittel (20) linienförmig und rechtwinklig zur Drehachse (A) am Schneidenträger (2) anlegbar sind.

7. Ausdrehkopf nach Anspruch 5 oder 6, **dadurch gekennzeichnet, dass** die Verstellmittel (20) eine exzentrische Walze aufweisen, welche im Werkzeugkörper (7) drehbar gelagert ist und mit welcher der Schneidenträger (2) entlang einer linienförmigen Berührungsfläche anlegbar ist.

8. Ausdrehkopf nach Anspruch 7, **dadurch gekennzeichnet, dass** die exzentrische Walze (20) selbsthemmend in einer Bohrung (21) des Werkzeugkörpers (7) gelagert ist.

9. Ausdrehkopf nach einem der Ansprüche 5 bis 8, **dadurch gekennzeichnet, dass** die Verstellmittel (20) zwischen der Mitnahmefläche (9) und der Spannfläche (6) des Werkzeugkörpers (7) angeordnet sind.

10. Ausdrehkopf nach einem der Ansprüche 1 bis 9, **dadurch gekennzeichnet, dass** die Spannmittel (8) wenigstens eine Spannschraube aufweisen, die sich axial in eine Gewindebohrung (17) des Werkzeugkörpers (7) erstreckt und den Schneidenträger (2) gegen den Werkzeugkörper (7) spannt.

11. Ausdrehkopf nach Anspruch 10, **dadurch gekennzeichnet, dass** die Spannschraube (8) ein Langloch (16) des Schneidenträgers (2) durchgreift.

12. Ausdrehkopf nach Anspruch 10 oder 11, **dadurch gekennzeichnet, dass** der Schneidenträger (2) eine quer zur Drehachse (A) verlaufende Stellschraube (24) aufweist, die zur Einstellung des Ausdrehdurchmessers an die Spannmittel (8) anlegbar ist.

13. Ausdrehkopf nach einem der Ansprüche 1 bis 12, **dadurch gekennzeichnet, dass** zwei Schneidenträger (2) am Werkzeugkörper (7) gelagert sind.

14. Ausdrehkopf nach Anspruch 13, **dadurch gekennzeichnet, dass** die beiden Schneidenträger (2) jeweils gegenüber ihrer Schneide (3) auf der gleichen Spannfläche (6) des Werkzeugkörpers (7) aufliegen.

## Claims

1. A boring head with a tool body and at least one bit carrier (2) affixed to the tool body (7) in a detachable manner, wherein the bit carrier (2) is slidably mounted for radial adjustment on a clamp surface of the tool body (7), with clamping means (8) for clamping the bit carrier (2) against said clamp surface (6) and with a catch surface (9) arranged on the tool body (7) which collaborates with a corresponding catch surface (10) of the bit carrier (2) for transmission of torque, wherein the tool body (7) at a distance from its catch plate surface (9) has an angled outer wedge surface (11) against which an angled wedge surface (12) of the bit carrier (2) is clamped and wherein the wedge surface (11) of the tool carrier (7) exerts a radial clamping force on the bit carrier (2) which clamps the catch plate of the bit carrier (2) radially against the catch plate surface (9) of the tool body (7) and wherein each wedge surface (11, 12) is slanted at a different angle with respect to the axis (A) of rotation of the tool body (7) in such a way that the bit carrier (2) in a linear line (B) contacts the wedge surface (11) of the tool body (7), wherein said linear line (B) is arranged in a distance to the catch surfaces (9, 10).

2. The boring head as in claim 1, wherein the catch surface (10) and the wedge surface (11) of the tool body (7) are arranged on an extension (18) of the tool body (7) and wherein the extension (18) engages a recess (19) in the bit carrier (2).

3. The boring head as in claim 1 or 2, wherein the tool body (7) has a clamp surface (6) located at a distance from its wedge surface (11) and running perpendicular to the axis of rotation (A) to which an upper surface (23) of the bit carrier (2) can be flatly positioned.

4. The boring head as in any of the claims 1 to 3, wherein the catch surface (10) of the bit carrier (2) and the catch surface (9) of the tool body (7) run essentially at right angles to the cutting force (F).

5. The boring head as in any of the claims 1 to 4, wherein the tool body (7) at a distance from the two wedge surfaces (11, 12) has adjusting means (20) with which the bit (3) can be moved axially for height adjustment.

6. The boring head as in claim 5, wherein the adjusting means (20) is at a right angle to the axis of rotation (A) and is disposed for linear contact with the bit carrier (2).

7. The boring head according to claim 5 or 6, wherein the adjusting means (20) comprises an eccentric roll which is rotatably mounted in the tool body (7) for linear contact with the bit carrier (2).

8. The boring head as in claim 7, wherein the eccentric roll (20) is mounted in a self-locking manner in a boring (21) within said tool body (7).

9. The boring head as in any of claims 5 to 8, wherein the adjusting means (20) is arranged in the tool body (7) between the catch surface (6) and the clamp surface (6) of the tool body (7).

10. The boring head as in any of the claims 1 to 9, wherein the clamping means (8) comprises at least one clamping screw which extends axially into a threaded boring (17) of the tool body (7) and clamps the bit carrier (2) against the tool body (7).

11. The boring head as in claim 10, wherein the clamp screw (8) slidably engages a transversely elongated hole (16) of the bit carrier (2).

12. The boring head as in claim 10 or 11, wherein the bit carrier (2) comprises a set screw (24) running transversely to the axis of rotation (A) for radially adjusting the boring diameter.

13. The boring head as in any of the claims 1 to 12, wherein two bit carriers (2) are mounted on the tool body (7).

14. The boring head according to claim 13, wherein each of the bit carriers (2) opposite to the bit (3) contacts the same clamp surface (6).

## Revendications

1. Tête à aléser comprenant un corps d'outil et au moins un porte-lame (2) fixé de manière amovible sur celui-ci, lequel est monté de manière à pouvoir glisser sur une surface de serrage (6) du corps d'outil (7) en vue du coulissement radial de la lame (3), avec des moyens de serrage (8) pour serrer le porte-lame (2) contre ladite surface de serrage (6) et avec une surface d'entraînement (9) disposée sur le corps d'outil (7), laquelle coopère avec une surface d'entraînement correspondante (10) du porte-lame (2) pour transférer les couples, le corps d'outil (7) présentant, à distance de sa surface d'entraînement (9), une surface en coin extérieure biseautée (11) contre laquelle une surface en coin (12) également biseautée du porte-lame (2) est serrée et la surface en coin (11) du porte-outil (7) exerçant sur le porte-lame (2) une force de serrage radiale, qui serre la surface d'entraînement (10) du porte-lame (2) radialement contre la surface d'entraînement (9) du corps d'outil (7), **caractérisée en ce que** les deux surfaces en coin (11, 12) sont orientées obliquement différemment par rapport à l'axe de rotation (A) du corps d'outil (7), de telle sorte que le porte-lame (2) s'applique essentiellement sur une ligne (B) contre la surface en coin (11) du corps d'outil (7), ladite ligne (B) étant espacée des surfaces d'entraînement (9, 10).

2. Tête à aléser selon la revendication 1, **caractérisée en ce que** la surface d'entraînement (10) et la surface en coin (11) du corps d'outil (7) sont disposées sur une avancée en saillie (18) du corps d'outil (7) et cette avancée (18) vient en prise dans un renfoncement (19) du porte-lame (2).

3. Tête à aléser selon la revendication 1 ou 2, **caractérisée en ce que** le corps d'outil (7) présente, à distance de sa surface en coin (11), une surface de serrage (6) s'étendant perpendiculairement à l'axe de rotation (A), laquelle est disposée en face de la lame (3) et sur laquelle peut être appliquée, à plat, une surface de serrage (23) du porte-lame (2).

4. Tête à aléser selon l'une quelconque des revendications 1 à 3, **caractérisée en ce que** la surface d'entraînement (10) du porte-lame (2) et la surface d'entraînement (9) du corps d'outil (7) s'étendent essentiellement à angle droit par rapport à la force de coupe (F).

5. Tête à aléser selon l'une quelconque des revendications 1 à 4, **caractérisée en ce que** le corps d'outil (7) présente, à distance des deux dites surfaces en coin (11, 12), des moyens de réglage (20) avec lesquels la lame (3) peut être déplacée axialement pour son réglage en hauteur.

6. Tête à aléser selon la revendication 5, **caractérisée en ce que** les moyens de réglage (20) peuvent être appliqués de manière linéaire et perpendiculaire par rapport à l'axe de rotation (A) sur le porte-lame (2).

7. Tête à aléser selon la revendication 5 ou 6, **caractérisée en ce que** les moyens de réglage (20) présentent un rouleau excentré qui est monté à rotation dans le corps d'outil (7) et avec lequel le porte-lame (2) peut être appliqué le long d'une surface de contact de forme linéaire.

8. Tête à aléser selon la revendication 7, **caractérisée en ce que** le rouleau excentré (20) est monté de manière autobloquante dans un alésage (21) du corps d'outil (7).

9. Tête à aléser selon l'une quelconque des revendications 5 à 8, **caractérisée en ce que** les moyens de réglage (20) sont disposés entre la surface d'entraînement (9) et la surface de serrage (6) du corps d'outil (7).

10. Tête à aléser selon l'une quelconque des revendications 1 à 9, **caractérisée en ce que** les moyens de serrage (8) présentent au moins une vis de serrage qui s'étend axialement dans un alésage fileté (17) du corps d'outil (7) et qui serre le porte-lame (2) contre le corps d'outil (7).

11. Tête à aléser selon la revendication 10, **caractérisée en ce que** la vis de serrage (8) passe à travers un trou oblong (16) du porte-lame (2).

12. Tête à aléser selon la revendication 10 ou 11, **caractérisée en ce que** le porte-lame (2) présente une vis de réglage (24) s'étendant transversalement à l'axe de rotation (A), laquelle peut être appliquée contre les moyens de serrage (8) en vue de l'ajustement du diamètre d'alésage.

13. Tête à aléser selon l'une quelconque des revendications 1 à 12, **caractérisée en ce que** deux porte-lames (2) sont montés sur le corps d'outil (7).

14. Tête à aléser selon la revendication 13, **caractérisée en ce que** les deux porte-lames (2) s'appliquent à chaque fois par rapport à leur lame (3) sur la même surface de serrage (6) du corps d'outil (7).
